# EUROPÄISCHE PATENTSCHRIFT

(11) **EP 4 070 637 B1**
(45) Veröffentlichungstag und Bekanntmachung des Hinweises auf die Patenterteilung: **03.01.2024**
(21) Anmeldenummer: 22157213.4
(22) Anmeldetag: 17.02.2022
(51) Int. Cl.: A01C 15/04, A01M 7/00, A01C 23/00

(54) **LANDWIRTSCHAFTLICHE VERTEILMASCHINE MIT EINER MEHRZAHL VON AN AUSLEGERN ANGEORDNETEN VERTEILORGANEN**
AGRICULTURAL DISTRIBUTOR WITH A PLURALITY OF DISTRIBUTING MEMBERS ARRANGED ON ARMS
MACHINE D'ÉPANDAGE AGRICOLE DOTÉE D'UNE PLURALITÉ D'ÉLÉMENTS D'ÉPANDAGE DISPOSÉS SUR DES BRAS

(30) Priorität: 07.04.2021 DE 202021101857 U
(43) Veröffentlichungstag der Anmeldung: 12.10.2022
(73) Patentinhaber: RAUCH Landmaschinenfabrik GmbH, 77836 Rheinmünster (DE)
(72) Erfinder: Meier, Julian, 77815 Bühl (DE); Herberg, Michael, 76534 Baden-Baden (DE); Zeitvogel, Thomas, 77836 Rheinmünster (DE)
(74) Vertreter: Lichti - Patentanwälte Partnerschaft mbB

(56) Entgegenhaltungen:
- EP-A1- 0 429 934
- DE-A1- 10 021 213
- DE-C2- 3 230 489

## Beschreibung

Die Erfindung betrifft eine landwirtschaftliche Verteilmaschine, umfassend:
- wenigstens einen von einem Maschinenrahmen getragenen Vorratsbehälter zur Aufnahme von Verteilgut;
- wenigstens ein dem Vorratsbehälter nachgeordnetes Dosierorgan;
- wenigstens zwei an dem Maschinenrahmen und/oder an dem Vorratsbehälter schwenkbar gelagerte Ausleger;
- eine Mehrzahl an von einem jeweiligen Ausleger getragenen und mit Abstand voneinander angeordneten Verteilorganen; und
- eine Mehrzahl an Förderleitungen, welche zur Überführung des Verteilgutes von dem Dosierorgan an die Verteilorgane dienen und von welchen zumindest endständige Förderleitungsabschnitte von den Auslegern getragen sind,
wobei die Ausleger mittels je eines motorischen Stellantriebs zwischen einer Betriebsposition, in welcher sich die Ausleger vornehmlich horizontal in entgegengesetzte Richtungen quer zur Längsachse der Verteilmaschine erstrecken, und einer Transport- und Ruheposition, in welcher sich die Ausleger vornehmlich vertikal erstrecken, verschwenkbar sind.

Landwirtschaftliche Verteilmaschinen der vorgenannten Art können einerseits in leichter Bauart als Anbaugeräte konzipiert sein, welche mit dem Dreipunkt einer Zugmaschine, wie eines Traktors, gekoppelt werden können; anderseits können sie in schwerer Bauart auf einen achsgestützten Nachläufer oder einen Selbstfahrer aufgesetzt sein. Sie umfassen üblicherweise seitlich nach außen ragende Ausleger, welche in unterschiedlichem Abstand voneinander endende Förderleitungsabschnitte aufnehmen und insbesondere im Falle von verhältnismäßig großen Arbeitsbreiten, wie beispielsweise von etwa 18 m, 24 m, 30 m oder dergleichen, eine Mehrzahl an schwenkbar aneinander angelenkten Auslegersegmenten umfassen, um die Ausleger zwischen einer Betriebsposition, in welcher sie sich vornehmlich horizontal in entgegengesetzte Richtungen quer zur Längsachse der Verteilmaschine, also im Wesentlichen quer zu Fahrtrichtung der Verteilmaschine, erstrecken und die ausgeklappten Auslegersegmente im Wesentlichen horizontal und linear hintereinander angeordnet sind, und einer Transport- und Ruhe- oder auch Reinigungsposition, in welcher sich die Ausleger vornehmlich vertikal erstrecken und die Auslegersegmente im Wesentlichen parallel zueinander aneinander angeklappt sind, hin und her zu verschwenken, so dass die landwirtschaftliche Verteilmaschine z.B. über öffentliche Straßen zu ihrem Einsatzort auf dem Feld verbracht werden kann.

Handelt es sich bei einer solchen landwirtschaftlichen Verteilmaschine beispielsweise um eine pneumatische Verteilmaschine, so dient zur Förderung des in dem Vorratsbehälter auf Vorrat gehaltenen, in der Regel pulver- oder partikelförmigen Verteilgutes, wie Dünger, Saatgut und dergleichen, ein Gebläse, dessen Druckleitung sich z.B. an einen Auslass eines oder mehrerer, dem Vorratsbehälter nachgeordneter Dosierorgane, welche beispielsweise eine gesteuert und/oder geregelt drehangetriebene Dosierwalze umfassen, anschließt und in einem Druckverteiler mündet, an welchen sich eine Mehrzahl an Förderleitungen anschließt. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von dem Dosierorgan an die Förderleitungen, um sicherzustellen, dass jeder Förderleitung die gewünschte Menge an Verteilgut aufgegeben wird. Das Verteilgut wird schließlich pneumatisch über die nach außen umgelenkten und sich entlang der jeweiligen Ausleger erstreckenden Förderleitungsabschnitte bis zu deren Ende gefördert, wo das Verteilgut an entsprechende Verteilorgane überführt wird, welche jeweils mit Abstand voneinander an den Auslegern bzw. an dessen Auslegersegmenten angeordnet sind. Die Verteilorgane können im Falle eines pneumatischen Düngerstreuers z.B. nach Art von Prallplatten bzw. Pralltellern ausgestaltet sein, auf welche das in einer jeweiligen Förderleitung pneumatisch transportierte Verteilgut auftrifft und von dort im Wesentlichen fächerförmig auf dem Boden abgelegt wird. Im Falle von pneumatischen Sämaschinen oder Drillmaschinen können die Verteilorgane z.B. von Säscharen oder dergleichen gebildet sein, welche gleichfalls über den jeweiligen Förderleitungsabschnitt mit pneumatisch transportiertem Verteilgut versorgt werden. Eine derartige pneumatische Verteilmaschine in Form eines pneumatischen Düngerstreuers ist beispielsweise aus der DE 10 2004 030 240 A1 sowie insbesondere aus der zum Prioritätsdatum der vorliegenden Anmeldung noch nicht veröffentlichten DE 20 2020 001 692 U1 bekannt. Eine gattungsgemäße Verteilmaschine mit Auslegern mit einer Mehrzahl an schwenkbar aneinander angelenkten Auslegersegmenten der vorgenannten Art ist ferner der zum Prioritätsdatum der vorliegenden Anmeldung gleichfalls noch nicht veröffentlichten DE 10 2019 007 650 A1 zu entnehmen.

Handelt es sich bei einer landwirtschaftlichen Verteilmaschine der eingangs genannten Art beispielsweise um eine sogenannte Feldspritze, so dienen zur Dosierung und Förderung des in dem - in diesem Fall üblicherweise von einem Tank gebildeten - Vorratsbehälter auf Vorrat gehaltenen, in der Regel flüssigen Verteilgutes, wie Pflanzenschutzmitteln, Pestiziden, Herbiziden und dergleichen, eine oder insbesondere mehrere Pumpen, deren Förderleitungen wiederum nach außen umgelenkt sind, sich entlang der jeweiligen Ausleger erstrecken und zur Versorgung eines jeweiligen Verteilorgans dienen, wobei die Verteilorgane gleichfalls jeweils mit Abstand voneinander an den Auslegern bzw. an deren Auslegersegmenten angeordnet sind. Die Verteilorgane können in diesem Fall z.B. nach Art von, insbesondere hinsichtlich ihrer Verteilmenge steuerbaren, Düsen ausgestaltet sein, welche das flüssige Verteilgut in der jeweils vorgesehenen Verteilungsbreite versprühen.

Als in konstruktiver Hinsicht relativ aufwändig gestaltet sich häufig der Aufbau der Ausleger sowie deren schwenkbare Befestigung an dem Maschinenrahmen und/oder an dem Vorratsbehälter der Verteilmaschine unter Gewährleistung einer Verlagerung derselben zwischen ihrer Betriebsposition und ihrer Transport- und Ruheposition mittels je eines motorischen Stellantriebs, welcher üblicherweise hydraulische oder elektrische Kolben-/Zylindereinheiten umfasst, welche zwischen einem jeweiligen Ausleger - bzw. im Falle eines aus mehreren Auslegersegmenten gebildeten Ausleger: zwischen dem inneren, der Längsachse der Verteilmaschine nahen Auslegersegment eines jeweiligen Auslegers - und dem Maschinenrahmen und/oder dem Vorratsbehälter der Verteilmaschine wirksam sind. Die Ausleger müssen hierbei mit zunehmender Arbeitsbreite und hiermit einhergehender zunehmender Gesamtlänge erhebliche Lasten sowie insbesondere Drehmomente aufnehmen, sollten unter Sicherstellung der notwendigen mechanischen Stabilität aber gleichwohl nicht übermäßig massiv ausgestaltet sein, um das Gesamtgewicht der landwirtschaftlichen Verteilmaschine in vertretbaren Grenzen zu halten, wobei sie vorzugsweise zugleich die Klappfunktion der einzelnen Auslegersegmente relativ zueinander zu gewährleisten haben. Ein Problem besteht dabei insbesondere darin, dass es während des Betriebs gattungsgemäßer landwirtschaftlicher Verteilmaschinen auf unebenem Gelände auch bei relativ langsamer Fahrt zu erheblichen Schwankungen der Verteilmaschine kommt, welche sich über die erhebliche Länge der Ausleger potenziert, so dass infolge der fortwährenden mechanischen Stoßbelastungen die Gefahr einer Beschädigung der Ausleger selbst und/oder deren motorischer Stellantriebe besteht. Da im Falle solcher Schwankungen der Verteilmaschine auch der Abstand der von den Auslegern getragenen Verteilorgane gegenüber dem Boden großen Veränderungen unterliegt (insbesondere im Falle der relativ weit außen angeordneten Verteilorgane), wird hierbei auch die Verteilgenauigkeit von in Form von Pralltellern oder Düsen ausgestalteten Verteilorganen in erheblichem Maße beeinträchtigt, da diese auf einen vorherbestimmten Abstand vom Boden ausgelegt sind, um infolge Überlappung der Verteilungsbreiten von jeweils benachbarten Verteilorgane für eine möglichst konstante Querverteilung über die gesamte Arbeitsbreite der Verteilmaschine zu sorgen.

Die Gefahr einer mechanischen Beschädigung der Ausleger einschließlich deren motorischer Stellantriebe besteht um so mehr, als ab einer gewissen, auch nur kurzzeitigen Neigungsstellung der Verteilmaschine, wenn diese beispielsweise relativ starke Unebenheiten des Bodens überfährt, die Gefahr droht, dass die Ausleger auf dem Boden aufschlagen. Entsprechendes gilt im Falle des Betriebs der Verteilmaschine an einer Hanglage, welcher sich zudem insoweit als problematisch erweist, als die Abstände der von den Auslegern getragenen Verteilorgane von dem Boden auch bei verhältnismäßig "ruhiger" Fahrt über relativ ebenes Gelände aufgrund der Hangneigung erheblich variieren können, was wiederum mit dem oben beschriebenen Problem einer beeinträchtigten Verteilgenauigkeit einhergeht. Eine weitere vorbekannte landwirtschaftliche Verteilmaschine ist in der DE 32 30 489 C2 offenbart.

Der Erfindung liegt daher die Aufgabe zugrunde, eine landwirtschaftliche Verteilmaschine der eingangs genannten Art auf einfache und kostengünstige Weise dahingehend weiterzubilden, dass unter zumindest weitestgehender Vermeidung der vorgenannten Nachteile die Gefahr einer Beschädigung der Ausleger einschließlich deren motorischer Stellantriebe während des Betriebs unter Gewährleistung einer hohen Verteilgenauigkeit minimiert wird.

Erfindungsgemäß wird diese Aufgabe bei einer landwirtschaftlichen Verteilmaschine der eingangs genannten Art dadurch gelöst, dass an dem Maschinenrahmen und/oder an dem Vorratsbehälter ein Hebel um eine sich im Wesentlichen parallel zur Längsachse der Verteilmaschine erstreckende Schwenkachse schwenkbar gelagert ist, wobei der Hebel einen ersten Hebelarm aufweist, an dessen seiner Schwenkachse fernem Ende ein jeweiliger Ausleger in seiner Betriebsposition mittels wenigstens eines Tragmittels aufgehängt ist, und wobei der Hebel einen zweiten Hebelarm aufweist, dessen seiner Schwenkachse fernes Ende in Bezug auf den Maschinenrahmen und/oder auf den Vorratsbehälter festgestellt ist, wobei zumindest ein Axialabschnitt des Hebels quer zur Längsachse der Verteilmaschine elastisch nachgiebig ausgestaltet ist, um für einen Pendelausgleich der Ausleger in deren Betriebsposition zu sorgen.

Die erfindungsgemäße Ausgestaltung sieht folglich vor, dass die jeweils an dem Maschinenrahmen und/oder an dem Vorratsbehälter der Verteilmaschine schwenkbar gelagerten und mittels ihres jeweiligen motorischen Stellantriebs zwischen der Betriebsposition und der Transport- und Ruheposition betätigbaren Ausleger mittels ihrer Tragmittel mechanisch miteinander gekoppelt sind, wobei die Tragmittel eines jeweiligen Auslegers an dem ersten Hebelarm des schwenkbar gelagerten Hebels festgelegt sind, so dass die Ausleger gemeinsam an dem ersten Hebelarm des Hebels aufgehängt sind. Aufgrund der elastisch nachgiebigen Ausgestaltung zumindest eines Axialabschnittes des Hebels - sei es an dessen ersten und/oder sei es an dessen zweitem Hebelarm - vermag sich der um seine etwa parallel zur Längsachse der Verteilmaschine angeordnete Schwenkachse schwenkbar gelagerte Hebel elastisch zu verformen, wobei er hierbei geringfügig um seine Schwenkachse verschwenkt werden kann, so dass im Falle von mechanischen Stößen, Schwingungen, Vibrationen etc. das der Schwenkachse ferne Ende des ersten Hebelarms des Hebels, an welchem die Haltemittel eines jeweiligen Auslegers festgelegt sind, elastisch quer zur Längsachse der Verteilmaschine ausweichen kann, so dass mechanische Stoßbelastungen der Ausleger einerseits abgedämpft, andererseits mechanische Belastungen des einen Auslegers von dem anderen Ausleger aufgenommen werden. Das der Schwenkachse ferne Ende des zweiten Hebelarms des Hebels bleibt dabei in der vorgesehenen Betriebsposition der Ausleger festgestellt. Auf diese Weise ergibt sich ein konstruktiv einfacher, aber gleichwohl sehr wirksamer Pendelausgleich der Ausleger, wenn sich diese in ihrer Betriebsposition befinden.

In konstruktiver Hinsicht kann zweckmäßigerweise vorgesehen sein, dass sich der Hebel vornehmlich in Vertikalrichtung erstreckt, wobei sich der erste Hebelarm insbesondere von der Schwenkachse des Hebels vornehmlich nach oben erstrecken kann, wohingegen sich der zweite Hebelarm insbesondere von der Schwenkachse des Hebels vornehmlich nach unten erstrecken kann.

Gemäß einer konstruktiv einfachen und mechanisch robusten Ausführungsform kann der elastisch nachgiebige Axialabschnitt des Hebels vorzugsweise wenigstens zwei Blattfedern aufweisen, deren Erstreckungsebenen im Wesentlichen parallel zueinander und insbesondere im Wesentlichen parallel zur Längsachse der Verteilmaschine angeordnet sind, so dass eine elastische Nachgiebigkeit des Hebels quer zur Längsachse der Verteilmaschine sichergestellt ist, um auf die Ausleger einwirkende mechanische Belastungen aufzunehmen und zu dämpfen.

Aus Gründen einer sehr hohen mechanischen Stabilität kann es vorteilhaft sein, wenn nur einer der Hebelarme des Hebels von den wenigstens zwei Blattfedern gebildet ist, während der andere Hebelarm im Wesentlichen starr ausgestaltet ist, wobei vorzugsweise der zweite Hebelarm des Hebels von den wenigstens zwei Blattfedern gebildet sein kann.

Um für eine gute elastische Nachgiebigkeit des Hebels bei einer gleichwohl hohen mechanischen Stabilität zu sorgen, können die Blattfedern des nachgiebig elastisch ausgestalteten Axialabschnittes des Hebels vorteilhafterweise mit Abstand voneinander angeordnet sein, so dass die voneinander beabstandeten Blattfedern gemeinsam nach Art eines "Parallelogramms" elastisch verformbar sind.

Die Blattfedern eines der Hebelarme, z.B. des zweiten Hebelarms, können beispielsweise im Bereich der Schwenkachse des Hebels starr an dem anderen Hebelarm, z.B. an dem ersten Hebelarm, festgelegt sein, wobei sie beispielsweise an dem anderen, z.B. im Wesentlichen starren, Hebelarm verschraubt oder verschweißt sein können.

An dem der Schwenkachse fernen Ende des Hebels können die Blattfedern eines der Hebelarme, z.B. des zweiten Hebelarms, vorzugsweise in den Zwischenräumen von parallel angeordneten Walzen eines Walzenpaketes aufgenommen sein, so dass sie einerseits voneinander beabstandet, andererseits ohne eine lokal übermäßige Biegebeanspruchung sicher und zuverlässig befestigt sind, wobei sie im Falle einer Biegebeanspruchung entlang der Oberfläche der Walzen abrollen können. Das Walzenpaket kann dabei insbesondere in einem Tragkäfig angeordnet sein, wobei die Walzen des Walzenpaketes an dem Tragkäfig festgelegt sein können.

Um für eine größtmögliche mechanische Stabilität des Hebels bei einer gleichwohl hohen elastischen Nachgiebigkeit desselben zu sorgen, kann der nachgiebig elastisch ausgestaltete Hebelarm des Hebels, z.B. dessen zweiter Hebelarm, vorzugsweise mittels eines Zusatzhebels stabilisiert sein, wobei der Zusatzhebel koaxial zu dem Hebel schwenkbar gelagert und an dem der Schwenkachse des nachgiebig elastisch ausgestalteten Hebelarms des Hebels fernen Ende mit diesem verbunden ist. Der in herkömmlicher Weise im Wesentlichen starre und beispielsweise nach Art einer Konsole ausgestaltete Zusatzhebel, welcher koaxial zu dem Hebel schwenkbar gelagert ist, ohne drehfest mit dem Hebel verbunden zu sein, fixiert den elastisch nachgiebig ausgestalteten Hebelarm des Hebels auf diese Weise einerseits an der Schwenkachse des Hebels, andererseits an dem der Schwenkachse fernen Ende des elastisch nachgiebig ausgestalteten Hebelarms des Hebels, wobei aber nur der elastisch nachgiebig ausgestaltete Hebelarm des Hebels elastisch verformt werden kann, um für den erfindungsgemäßen Pendelausgleich der Ausleger zu sorgen.

Die Verbindung eines solchen Zusatzhebels mit dem der Schwenkachse des elastisch nachgiebig ausgestalteten Hebelarms fernen Ende des Hebels kann dabei beispielsweise mittels des vorstehend beschriebenen Walzenpaketes geschehen, welches an dem Zusatzhebel angeordnet ist. Der Tragkäfig mit dem Walzenpaket, zwischen dessen parallel angeordneten Walzen die Blattfedern eines der Hebelarme des Hebels aufgenommen sind, kann zu diesem Zweck an dem der Schwenkachse fernen Ende des Zusatzhebels angeordnet sein.

Während der zweite Hebelarm des Hebels an seinem der Schwenkachse fernen Ende grundsätzlich auch stationär an dem Maschinenrahmen und/oder an dem Vorratsbehälter festgestellt sein kann, um für den erfindungsgemäßen Pendelausgleich der Ausleger zu sorgen, kann gemäß einer vorteilhaften Weiterbildung vorgesehen sein, dass der zweite Hebelarm des Hebels an seinem der Schwenkachse fernen Ende an einem ersten Stellglied angelenkt ist, um den Hebel durch Betätigung des ersten Stellgliedes in verschiedenen, um die Schwenkachse verschwenkten Positionen in Bezug auf den Maschinenrahmen und/oder auf den Vorratsbehälter festzustellen und auf diese Weise für einen Hangausgleich der Ausleger in deren Betriebsposition zu sorgen. Wird der Hebel mittels des ersten Stellgliedes folglich um einen vorgegebenen Winkel um seine Schwenkachse verschwenkt, so erfährt das der Schwenkachse des Hebels ferne Ende des ersten Hebelarms, an welchem die Tragmittel der Ausleger festgelegt sind, eine Verlagerung quer zur Längsachse der Verteilmaschine, so dass der eine Ausleger um einen bestimmten Winkel angehoben wird, während der andere Ausleger um einen entsprechenden Winkel abgesenkt wird, wie es für die Fahrt an Hanglagen wünschenswert sein kann, damit die von den Auslegern getragenen Verteilorgane gewisse Mindest- bzw. Maximalabstände gegenüber dem Boden nicht unter- bzw. überschreiten, was aus den eingangs genannten Gründen zu einer ungleichmäßigen Querverteilung führen könnte.

Das erste Stellglied kann grundsätzlich in beliebiger bekannter Weise ausgestaltet sein und beispielsweise eine Kolben-/Zylindereinheit aufweisen, welche zwischen dem Maschinenrahmen und/oder dem Vorratsbehälter der Verteilmaschine und dem der Schwenkachse des Hebels fernen Ende des zweiten Hebelarms wirksam ist. Es kann dabei z.B. eine elektrische oder auch hydraulische Kolben-/Zylindereinheit umfassen, welche eine eigene Energieversorgung aufweisen oder an die Bordelektrik bzw. an das Hydrauliksystem eines Zugfahrzeugs, wie eines Traktors, anschließbar sein kann.

Während die Tragmittel der Ausleger grundsätzlich auch unmittelbar an dem der Schwenkachse des Hebels fernen Ende des ersten Hebelarms festgelegt sein können, kann gemäß einer weiteren vorteilhaften Weiterbildung vorgesehen sein, dass ein jeweiliges Tragmittel eines jeweiligen Auslegers über je ein zweites Stellglied an dem der Schwenkachse des Hebels fernen Ende des ersten Hebelarms aufgehängt ist, um einen jeweiligen Ausleger durch Betätigung des jeweiligen zweiten Stellgliedes aus seiner Betriebsposition anzuheben und/oder abzusenken. Auf diese Weise kann ein jeweiliger Ausleger durch Betätigung eines jeweiligen zweiten Stellgliedes unabhängig voneinander aus einer im Wesentlichen horizontalen Betriebsposition nach oben angehoben werden, wie es beispielsweise bei der starken Schwankungen der Verteilmaschine erforderlich sein kann, und/oder um auf dem Feld vorhandene Hindernisse, wie Felsen, Büsche, Böschungen oder dergleichen, zu passieren, ohne dass die Gefahr besteht, dass der jeweilige Ausleger an ein solches Hindernis anstößt.

Ein jeweiliges zweites Stellglied kann beispielsweise wiederum je eine Kolben-/Zylindereinheit aufweisen, welche zwischen dem der Schwenkachse des Hebels fernen Ende des ersten Hebelarms und einem jeweiligen Tragmittel eines jeweiligen Auslegers wirksam ist. Es kann dabei beispielsweise eine elektrische oder auch hydraulische Kolben-/Zylindereinheit umfassen, welche wiederum eine eigene Energieversorgung aufweisen oder an die Bordelektrik bzw. an das Hydrauliksystem eines Zugfahrzeugs, wie eines Traktors, anschließbar sein kann.

In diesem Zusammenhang kann z.B. vorgesehen, dass
- der Kolben oder der Zylinder der Kolben-/Zylindereinheit eines jeweiligen zweiten Stellgliedes an dem der Schwenkachse fernen Ende des ersten Hebelarms des Hebels angelenkt ist und
- der Zylinder oder der Kolben der Kolben-/Zylindereinheit eines jeweiligen zweiten Stellgliedes an einer stationär an dem Maschinenrahmen und/oder an dem Vorratsbehälter angeordneten Führung geführt ist,
um die jeweilige Kolben-/Zylindereinheit des jeweiligen zweiten Stellgliedes an dem Maschinenrahmen und/oder an dem Vorratsbehälter der Verteilmaschine in Position zu halten.

Die Ausleger der Verteilmaschine können ferner mit Sensoren ausgestattet sein, welche z.B. im Bereich der außenseitigen Enden der Ausleger angeordnet sein können und zur Erfassung des Abstandes eines jeweiligen Auslegers vom Boden ausgebildet sind. Die Sensoren, welche zweckmäßigerweise von beliebigen bekannten berührungsfreien Abstandssensoren, wie z.B. Radar-, Ultraschallsensoren oder dergleichen gebildet sein können, stehen zweckmäßigerweise mit einer Steuer- und/oder Regeleinrichtung zur Betätigung des ersten Stellgliedes und/oder des zweiten Stellgliedes in Verbindung, so dass z.B. im Falle einer sensorisch erfassten Hangneigung (der Abstand des einen Auslegers vom Boden nimmt zu, während der Abstand des anderen Auslegers vom Boden abnimmt) das erste Stellglied derart aktiviert wird, um die Ausleger in eine Hangausgleichsposition zu versetzen, bei welcher der eine Ausleger abgesenkt und der andere Ausleger angehoben wird. Darüber hinaus können beispielsweise im Falle von sensorisch erfassten starken Schwingungen der Verteilmaschine (der Abstand beider Ausleger vom Boden überschreiten zumindest zeitweilig einen vorherbestimmten Mindestabstand) die zweiten Stellglieder derart aktiviert werden, um die Ausleger in eine gegenüber der "normalen" Betriebsposition angehobene Position nach Art einer "V"-Stellung zu überführen.

Die Tragmittel der Ausleger können grundsätzlich von beliebiger bekannter Bauart sein und z.B. von Metallseilen, wie Stahlseilen oder dergleichen, gebildet sein.

Ein jeweiliges Tragmittel kann dabei vorzugsweise unter einem möglichst großen und insbesondere größeren Abstand von der Längsachse der Verteilmaschine an einem jeweiligen Ausleger festgelegt sein als der motorische Stellantrieb eines jeweiligen Auslegers, um für einen möglichst langen, durch den Abstand zwischen der Schwenkachse eines jeden Auslegers und der Befestigungsstelle eines jeweiligen Tragmittels an dem Ausleger vorgegebenen Hebelarm zu sorgen und somit die auf den erfindungsgemäßen Pendelausgleich einwirkenden Drehmomente im Falle von mechanischen Stoßbelastungen zu reduzieren.

Wie bereits angedeutet, kann ein jeweiliger Ausleger dabei vorteilhafterweise eine Mehrzahl an schwenkbar aneinander angelenkten Auslegersegmenten umfassen, wie sie als solche beispielsweise in der zum Prioritätsdatum der vorliegenden Anmeldung noch nicht veröffentlichten DE 10 2019 007 650 A1 beschrieben sind, wobei ein jeweiliges Tragmittel insbesondere im Bereich des der Längsachse der Verteilmaschine fernen Endes eines jeweiligen der Längsachse der Verteilmaschine nahen Auslegersegmentes festgelegt ist.

Wie als solches z.B. aus der vorerwähnten DE 10 2019 007 650 A1 bekannt, können die Auslegersegmente des Auslegers ferner zweckmäßigerweise zwischen der Transport- und Ruheposition, in welcher sie sowohl im Wesentlichen parallel zueinander als auch vornehmlich vertikal angeordnet sind, und der Betriebsposition, in welcher sie sowohl im Wesentlichen hintereinander als auch vornehmlich horizontal angeordnet sind, relativ zueinander verschwenkbar sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen landwirtschaftlichen Verteilmaschine zum Ausbringen von pulver- oder partikelförmigem Verteilgut in Form einer pneumatischen Verteilmaschine, wie eines Pneumatik-Düngerstreuers, wobei nur deren in Fig. 1 linker Ausleger zeichnerisch wiedergegeben ist, welcher an einem schwenkbar gelagerten Tragrahmen festgelegt ist und sich in einer vertikalen Transport- und Ruheposition befindet, wobei ein erfindungsgemäßer Pendelausgleich der Ausleger aus Veranschaulichungsgründen weggelassen worden ist;
- Fig. 2: eine der Fig. 1 entsprechende, schematische perspektivische Ansicht der landwirtschaftlichen Verteilmaschine mit deren in Fig. 2 linkem Ausleger ebenfalls in einer vertikalen Transportund Ruheposition, aber nachdem der den Ausleger tragende Tragrahmen in eine Betriebsposition verschwenkt worden ist, wobei ein erfindungsgemäßer Pendelausgleich der Ausleger aus Veranschaulichungsgründen wiederum weggelassen worden ist;
- Fig. 3: eine schematische perspektivische Detailansicht eines der Ausleger gemäß Fig. 1 und 2 in seiner im Wesentlichen horizontalen Betriebsposition;
- Fig. 4: eine schematische perspektivische Ansicht der Verteilmaschine gemäß Fig. 1 und 2 mit einer Ausführungsform eines erfindungsgemäßen Pendelausgleichs der Ausleger, wobei die Ausleger sowie deren Tragrahmen aus Veranschaulichungsgründen weggelassen worden sind;
- Fig. 5: eine schematische Seitenansicht der Verteilmaschine auf deren - in Fahrtrichtung betrachtet - rückwärtige Seite mit dem Pendelausgleich der Ausleger gemäß Fig. 4;
- Fig. 6: eine schematische perspektivische Detailansicht der Verteilmaschine entsprechend den Fig. 4 und 5 mit dem Pendelausgleich der Ausleger;
- Fig. 7: eine schematische perspektivische Detailansicht nur des Pendelausgleichs gemäß Fig. 6;
- Fig. 8: eine schematische perspektivische Detailansicht des Ausschnittes VIII der Fig. 7;
- Fig. 9: eine schematische perspektivische Detailansicht des Zusatzhebels des Pendelausgleichs gemäß Fig. 4 bis 8 mit hieran angelenktem ersten Stellglied;
- Fig. 10: eine schematische perspektivische Detailansicht des abschnittsweise elastisch nachgiebig ausgestalteten Hebels des Pendelausgleichs gemäß Fig. 4 bis 9;
- Fig. 11: eine schematische perspektivische Detailansicht des Pendelausgleichs im Wesentlichen entsprechend der Fig. 7, aber mit den zweiten Stellgliedern und den hieran festgelegten Tragmitteln in Explosionsdarstellung;
- Fig. 12A: eine schematische Funktionsdarstellung des Pendelausgleichs der Ausleger in seiner Normalstellung;
- Fig. 12B: eine der Fig. 12A entsprechende schematische Funktionsdarstellung des Pendelausgleichs der Ausleger in einer Hangausgleichsstellung; und
- Fig. 12C: eine der Fig. 12A und 12B entsprechende schematische Funktionsdarstellung des Pendelausgleichs der Ausleger in einer angehobenen Stellung der Ausleger.

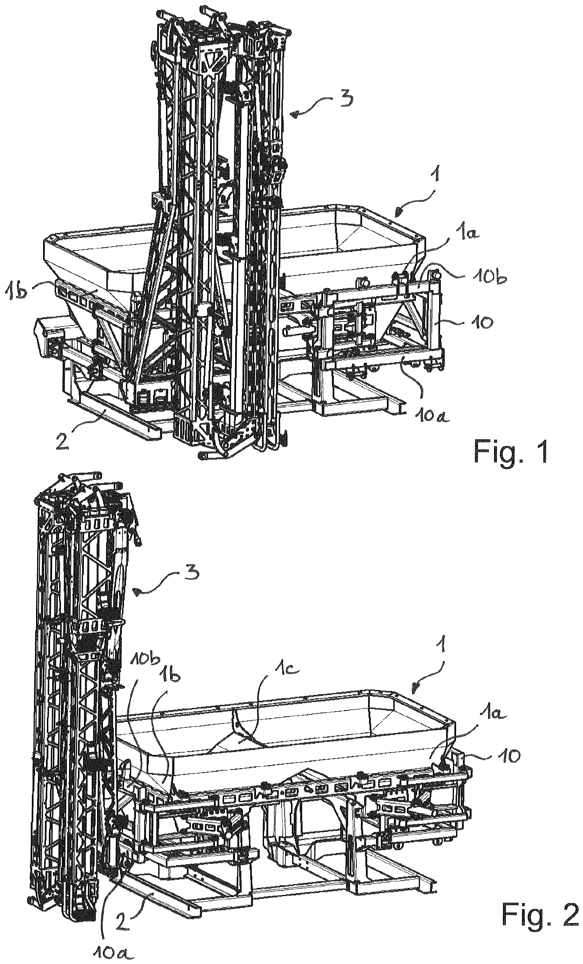

In den Fig. 1 und 2 ist ein Ausführungsbeispiel einer landwirtschaftlichen Verteilmaschine - hier in der Ausgestaltung einer pneumatischen Verteilmaschine - in Form eines von dem Dreipunkt-Kraftheber einer Zugmaschine, wie eines Traktors, aufnehmbaren Anbaugerätes exemplarisch wiedergegeben. Die Verteilmaschine ist im vorliegenden Fall beispielsweise als Pneumatik-Düngerstreuer ausgebildet und vermag zum Ausbringen von pulver- oder partikelförmigem Verteilgut, wie Dünger und/oder Saatgut, zu dienen.

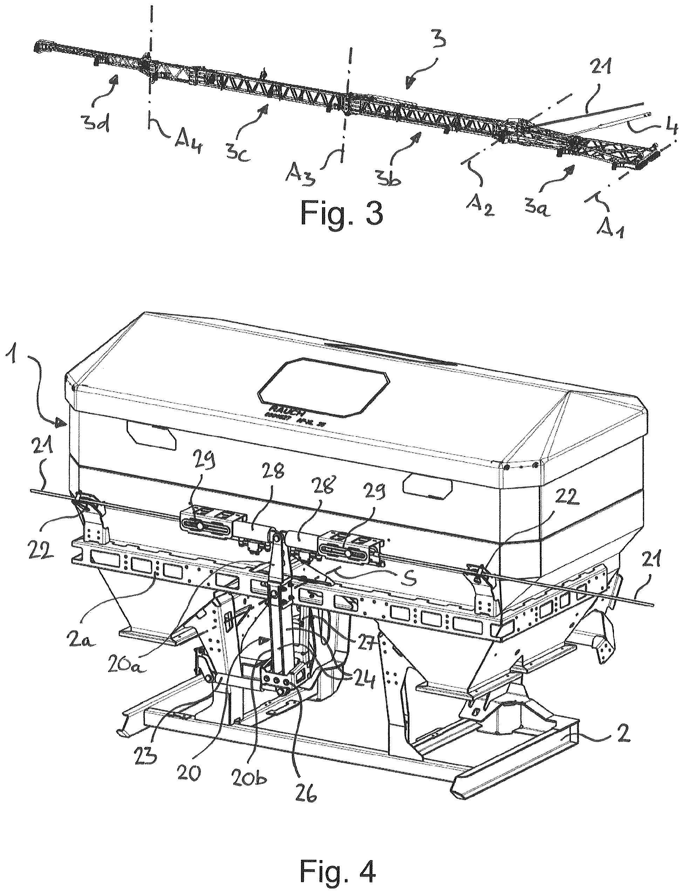

Die Verteilmaschine weist einen Vorratsbehälter 1 zur Aufnahme des Verteilgutes auf, welcher von einem Maschinenrahmen 2 getragen ist und im vorliegenden Fall zwei von einer zentralen Trennwand 1c (siehe die Fig. 2) voneinander getrennte Behälterteile 1a, 1b umfasst. Die beiden Behälterteile 1a, 1b verjüngen sich im unteren Bereich jeweils im Wesentlichen trichterförmig und enden in je einer (zeichnerisch nicht erkennbaren) Austrittsöffnung, wobei jeder Austrittsöffnung je ein (zeichnerisch ebenfalls nicht erkennbares) Dosierorgan nachgeordnet ist. Die Dosierorgane können beispielsweise nach Art von Nocken- oder Zellenrädern ausgestaltet sein, wobei eine mögliche Ausführungsform der Dosierorgane z.B. der WO 2018/219489 A1 zu entnehmen ist. Die Dosierorgane versorgen jeweils eine Gruppe an Förderleitungen (aus Veranschaulichungsgründen ebenfalls nicht gezeigt) mit dem dosierten Verteilgut, wobei die - hier zwei - Gruppen von Förderleitungen jeweils zu Paketen zusammengefasst sind und endständige Förderleitungsabschnitte einer jeweiligen Gruppe von Förderleitungen von je einem Ausleger 3 getragen sind. Von den Auslegern 3 sind in den Fig. 1 und 2 aus Veranschaulichungsgründen nur einer der beiden, im Übrigen identischen Ausleger 3 in deren Transport- und Ruheposition dargestellt, während die Fig. 3 eine Detailansicht eines der Ausleger 3 in dessen Betriebsposition zeigt.

Wie in den Fig. 1 und 2 sowie insbesondere in der Fig. 3 erkennbar, umfassen die im vorliegenden Fall mittels je eines Tragrahmen 10 schwenkbar an dem Maschinenrahmen 2 gelagerten Ausleger 3 eine Mehrzahl an - im vorliegenden Fall vier - schwenkbar aneinander angelenkten Auslegersegmenten 3a, 3b, 3c, 3d, nämlich - jeweils in der ausgeklappten Betriebsposition des Auslegers 3 gemäß der Fig. 3 betrachtet - ein inneres, erstes Auslegersegment 3a, ein zweitinnerstes, zweites Auslegersegment 3b, ein drittinnerstes bzw. zweitäußerstes, drittes Auslegersegment 3c und ein äu-ßeres, viertes Auslegersegment 3d. An dem ersten Auslegersegment 3a des Auslegers 3 greift ein motorischer Stellantrieb 4 an, welcher bei dem vorliegenden Ausführungsbeispiel von einer, beispielsweise elektrisch oder hydraulisch betätigten und vorzugsweise fernbedienbaren, Kolben-/Zylindereinheit gebildet ist und dazu dient, den Ausleger 3 zwischen seiner vornehmlich vertikalen Transport- und Ruheposition (vgl. die Fig. 1 und 2) und seiner vornehmlich horizontalen Betriebsposition (vgl. die Fig. 3) zu verschwenken bzw. aus-/einzuklappen. Das eine Ende der Kolben-/Zylindereinheit des motorischen Stellantriebs 4 ist dabei an dem ersten Auslegersegment 3a des Auslegers 3 angelenkt, während das andere Ende der Kolben-/Zylindereinheit des motorischen Stellantriebs 4 an dem Tragrahmen 10 des jeweiligen Auslegers 3 angelenkt ist, an welchem auch das erste Auslegersegment 3a des Auslegers 3 schwenkbar befestigt ist. Das erste Auslegersegment 3a kann auf diese Weise um eine etwa horizontale erste Schwenkachse A₁ zwischen seiner in der Fig. 3 dargestellten Betriebsposition, in welcher es sich etwa horizontal und quer zur Längsachse der Verteilmaschine erstreckt, und seiner Ruheposition gemäß der Fig. 1 bzw. 2, in welcher es im Wesentlichen vertikal nach oben an eine der Längsseiten der Verteilmaschine (der Tragrahmen 10 befindet sich in seiner Betriebsposition gemäß der Fig. 2) bzw. an deren Heckseite (der Tragrahmen 10 befindet sich ebenfalls in seiner Transport- und Ruheposition gemäß der Fig. 1) angeklappt ist, hin und her verschwenkt werden.

Das zweite Auslegersegment 3b ist an dem ersten Auslegersegment 3a um eine - bezogen auf die ausgeklappte Betriebsposition des Auslegers 3 - z.B. gleichfalls horizontale, zweite Schwenkachse A₂ schwenkbar angelenkt, um es zwischen seiner in der Fig. 3 dargestellten Betriebsposition, in welcher es sich etwa quer zur Fahrtrichtung der Verteilmaschine erstreckt, und seiner Ruheposition, in welcher es z.B. im Wesentlichen parallel gegen das erste Auslegersegment 3a angeklappt ist (vgl. die Fig. 1 und 2), hin und her verschwenken zu können, was manuell oder insbesondere gleichfalls in fernsteuerbarer Weise motorisch, z.B. hydraulisch oder elektrisch (nicht gezeigt), geschehen kann. Das dritte Auslegersegment 3c ist an dem dem ersten Auslegersegment 3a entgegengesetzten Ende des zweiten Auslegersegmentes 3b um eine - bezogen auf die ausgeklappte Betriebsposition des Auslegers 3 - z.B. vertikale, dritte Schwenkachse A₃ schwenkbar angelenkt, um es zwischen seiner in der Fig. 3 dargestellten Betriebsposition, in welcher es sich etwa quer zur Fahrtrichtung der Verteilmaschine erstreckt, und seiner Ruheposition, in welcher es z.B. im Wesentlichen parallel gegen das erste 3a und zweite Auslegersegment 3b angeklappt ist (vgl. die Fig. 1 und 2), hin und her verschwenken zu können, was wiederum manuell oder insbesondere in fernsteuerbarer Weise motorisch, z.B. hydraulisch oder elektrisch (nicht gezeigt), geschehen kann. Das vierte Auslegersegment 3d ist schließlich an dem dem zweiten Auslegersegment 3b entgegengesetzten Ende des dritten Auslegersegmentes 3c um eine - bezogen auf die ausgeklappte Betriebsposition des Auslegers 3 - z.B. wiederum horizontale, vierte Schwenkachse A₄ schwenkbar angelenkt, um es zwischen seiner in der Fig. 3 dargestellten Betriebsposition, in welcher es sich etwa quer zur Fahrtrichtung der Verteilmaschine erstreckt, und seiner Ruheposition, in welcher es z.B. im Wesentlichen parallel gegen das erste 3a, zweite 3b und dritte Auslegersegment 3c angeklappt ist (vgl. die Fig. 1 und 2), hin und her verschwenken zu können, was wiederum manuell oder insbesondere in fernsteuerbarer Weise motorisch, z.B. hydraulisch oder elektrisch (nicht gezeigt), geschehen kann.

Befindet sich ein jeweiliger, einen jeweiligen Ausleger 3 tragender Tragrahmen 10 demnach in seiner in der Fig. 2 gezeigten Betriebsposition seitlich des Vorratsbehälters 1, so lassen sich die Ausleger 3 durch Verschwenken ihrer Auslegersegmente 3a, 3b, 3c, 3d in der vorgenannten Weise aus ihrer Transport- und Ruheposition (Fig. 1 und 2) in ihre Betriebsposition (Fig. 3) überführen (und umgekehrt). Befinden sich die Ausleger 3 in einer solchen Betriebsposition der Fig. 3, in welcher sich ihre Auslegersegmente 3a, 3b, 3c, 3d im Wesentlichen linear hintereinander quer zur Längsachse der Verteilmaschine erstrecken, so enden die von einem jeweiligen Ausleger 3 aufgenommenen Förderleitungsabschnitte in unterschiedlichen Abständen von der Längsachse der Verteilmaschine an Verteilorganen (zeichnerisch nicht erkennbar), welche z.B. von Pralltellern bzw. -platten, Säscharen oder dergleichen gebildet sein können. Darüber hinaus umfasst die im vorliegenden Fall als Pneumatik-Düngerstreuer ausgestaltete Verteilmaschine ein oder insbesondere zwei Gebläse (gleichfalls zeichnerisch nicht erkennbar), welche zur Erzeugung eines Luftförderstromes zum Transport des mittels der Dosierorgane dosierten Verteilgutes durch die Förderleitungen dienen. Eine Druckleitung eines jeden Gebläses weist zu diesem Zweck in als solcher aus dem Stand der Technik bekannten Weise beispielsweise je einen, einem jeden Dosierorgan zugeordneten Abgang auf, welcher stromauf eines jeweiligen Dosierorgans an einen jeweiligen Luftverteiler mündet, welcher die Druckluft auf die einem jeden Dosierorgan zugeordnete Anzahl an Förderleitungen aufteilt. Unmittelbar stromab eines jeden Luftverteilers ist jeder Förderleitung eine Übergabekammer zugeordnet, welche in üblicher Weise mit einem, z.B. eine Düse und einen Diffusor umfassenden, Injektor ausgestattet sein kann und in welche das dosierte Verteilgut von dem jeweiligen Dosierorgan übergeben wird. Auch insoweit sei exemplarisch auf die oben zitierte WO 2018/219489 A1 verwiesen, während in Bezug auf die schwenkbare Anordnung der Ausleger 3 an den Tragrahmen 10 auf die zum Prioritätsdatum der vorliegenden Anmeldung noch nicht veröffentlichte DE 20 2020 001 692 U1 verwiesen sei.

Während sich die Tragrahmen 10 in der Fig. 1 in ihrer Transport- und Ruheposition befinden (sie sind an der Rückseite des Vorratsbehälters 1 bzw. der Verteilmaschine insgesamt angeordnet), befinden sie sich in der Fig. 2 in ihrer Betriebsposition (sie sind seitlich des Vorratsbehälters 1 bzw. der Verteilmaschine insgesamt angeordnet, so dass der Ausleger 3 in seine Betriebsposition der Fig. 3 ausgeklappt werden kann). Ein jeder Tragrahmen 10 kann dabei beispielsweise im Wesentlichen von einem sich in einer vertikalen Ebene erstreckenden Rechteckrahmen gebildet sein, an dessen oberem Längsträger 10b das eine Ende der Kolben-/Zylindereinheit des motorischen Stellantriebs 4 (vgl. die Fig. 3) schwenkbar angelenkt ist, während an dessen unterem Längsträger 10a das erste Auslegersegment 3a eines jeweiligen Auslegers 3 um die Achse A₁ schwenkbar angelenkt ist (vgl. auch die Fig. 3). Die Tragrahmen 10 eines jeden Auslegers 3 sind dabei zwischen ihrer Transport- und Ruheposition an der Rückseite des Vorratsbehälters 1 entsprechend der Fig. 1 und ihrer Betriebsposition seitlich des Vorratsbehälters 1 entsprechend der Fig. 2 um vertikale Schwenkachsen verschwenkbar, was gleichfalls mittels geeigneter motorischer Stellantriebe geschehen kann, wie es in der oben zitierten DE 20 2020 001 692 U1 im Einzelnen erläutert ist.

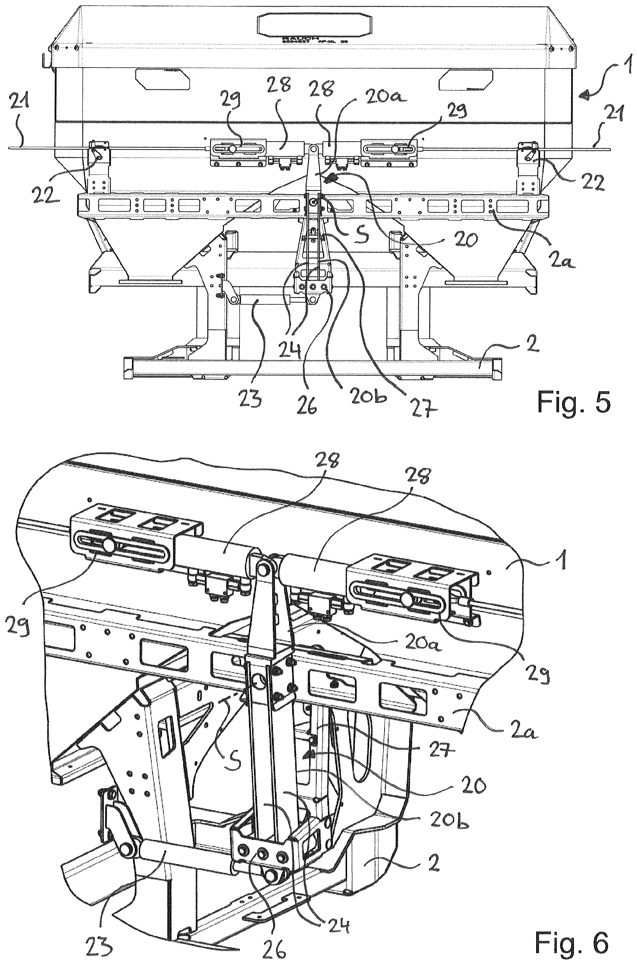

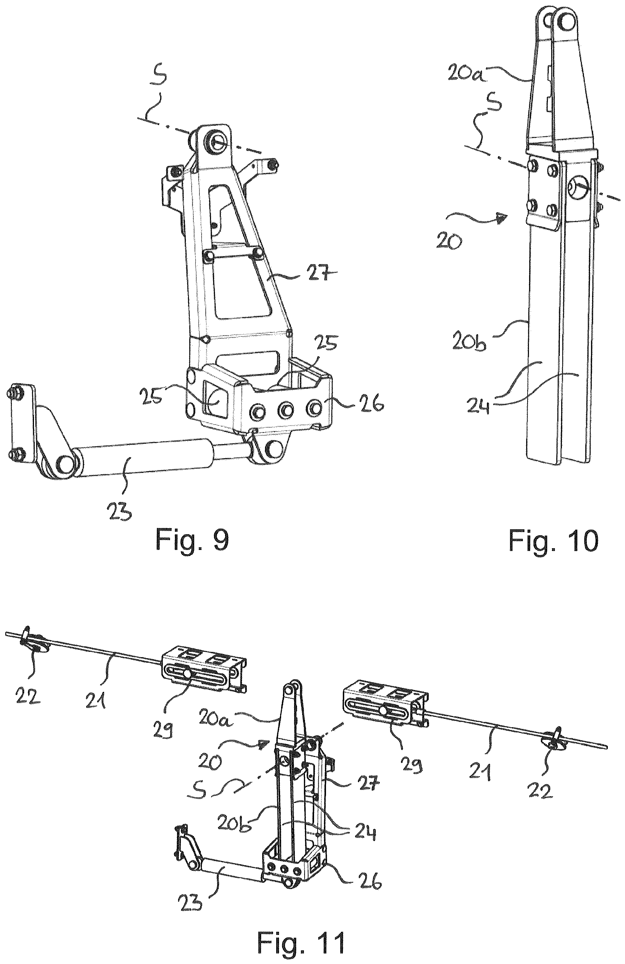

Wie insbesondere aus den Fig. 4 bis 7 hervorgeht, in welchen sowohl die Tragrahmen 10 als auch die von diesen aufgenommenen Ausleger 3 aus Veranschaulichungsgründen weggelassen worden sind, ist an der - in Fahrtrichtung betrachtet - rückwärtigen Seite der Verteilmaschine ein Hebel 20 um eine sich parallel zur Längsrichtung der Verteilmaschine erstreckende und zentral angeordnete Schwenkachse S schwenkbar gelagert, was beim vorliegenden Ausführungsbeispiel an einer den Vorratsbehälter 1 abstützenden Traverse 2a des Maschinenrahmens 2 geschieht. Wie auch den Detailansichten der Fig. 10 und 11 zu entnehmen ist, umfasst der Hebel 20 einerseits einen ersten Hebelarm 20a, welcher sich in einer Normalstellung des Hebels 20 von seiner Schwenkachse S etwa senkrecht nach oben erstreckt, und einen zweiten Hebelarm 20b, welcher sich in der Normalstellung des Hebels 20 von seiner Schwenkachse S etwa senkrecht nach unten erstreckt. An dem seiner Schwenkachse S fernen (oberen) Ende des ersten Hebelarms 20a ist ein jeweiliger Ausleger 3 (vgl. die Fig. 1 bis 3) in seiner Betriebsposition mittels je eines Tragmittels 21 aufgehängt, welches im vorliegenden Fall von je einem Metallseil, z.B. in Form eines Stahlseils, gebildet ist und sich von dem der Schwenkachse fernen Ende des ersten Hebelarms 20a des Hebels 20 jeweils quer nach außen erstreckt, an dem Maschinenrahmen 2 mittels Rollenanordnungen 22 geführt und an einem jeweiligen Ausleger 3 festgelegt ist. Wie aus der Fig. 3 hervorgeht, sind die Stahlseile der Tragmittel 21 bei dem gezeigten Ausführungsbeispiel unter einem größeren Abstand von der Längsachse der Verteilmaschine an einem jeweiligen Ausleger 3 festgelegt als die Kolben-/Zylindereinheit des motorischen Stellantriebs 4, wobei sie beispielsweise im Bereich des der Längsachse der Verteilmaschine fernen Endes des ersten Auslegersegmentes 3a an letzterem befestigt sind.

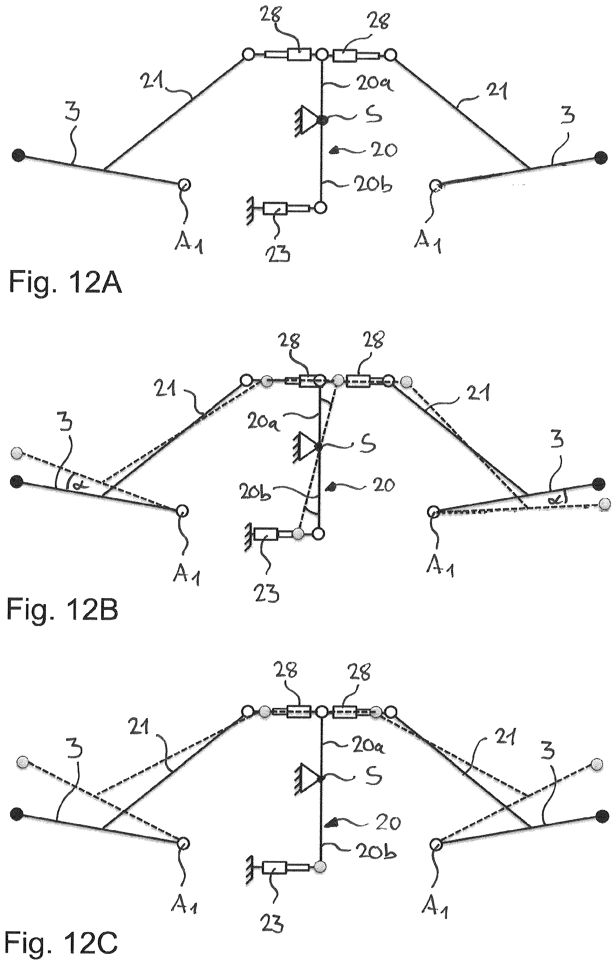

Der zweite Hebelarm 20b des Hebels 20 ist an seinem der Schwenkachse S fernen (unteren) Ende in Bezug auf den Maschinenrahmen 2 bzw. auf den Vorratsbehälter 1 festgestellt, was beim vorliegenden Ausführungsbeispiel mittels eines ersten Stellgliedes 23 geschieht, welches von einer, vorzugsweise elektrischen, Kolben-/Zylindereinheit gebildet ist, welche einerseits an dem unteren Ende des zweiten Hebelarms 20b des Hebels 20, andererseits an dem Maschinenrahmen 2 angelenkt ist. Wie weiter unten unter Bezugnahme auf die Fig. 12B noch näher erläutert, dient das erste Stellglied 23 zur bedarfsweisen Betätigung des Hebels 20 derart, dass dieser aus einer etwa vertikalen Normalstellung mit einem jeweils gewünschten Winkel um die Schwenkachse S verschwenkt wird und auf diese Weise für einen Hangausgleich der Ausleger 3 in deren Betriebsposition zu sorgen, indem der eine Ausleger 3 angehoben und der andere Ausleger 3 abgesenkt wird.

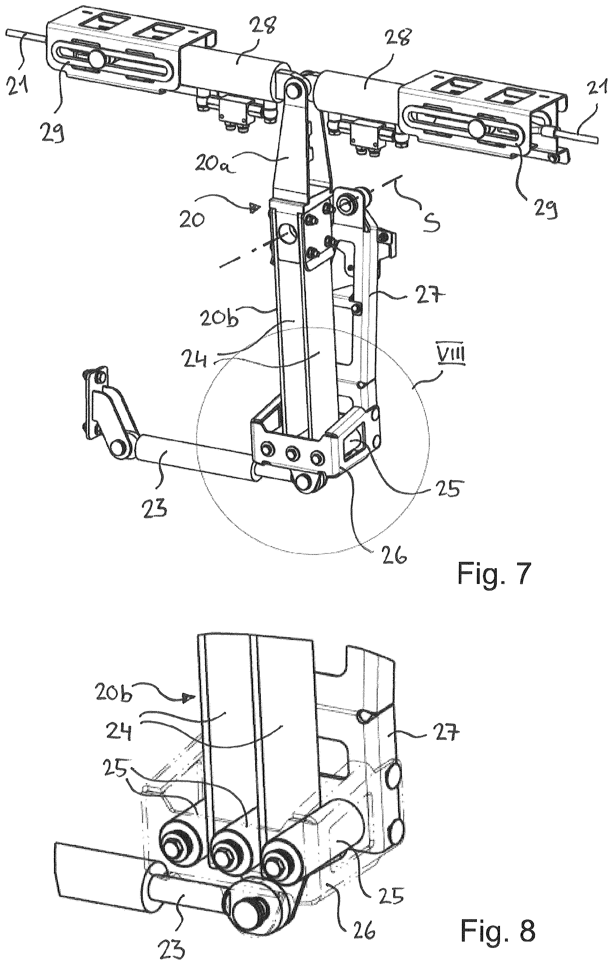

Um für einen Pendelausgleich der Ausleger 3 in deren Betriebsposition zu sorgen und auf die Ausleger 3 während des Betriebs einwirkende mechanische Schwingungen, Stoßbelastungen und dergleichen abzudämpfen, ist ein Axialabschnitt des Hebels 20 quer zur Längsachse der Verteilmaschine elastisch nachgiebig ausgestaltet, wobei es sich bei dem elastisch nachgiebig ausgestalteten Axialabschnitt des Hebels 20 im vorliegenden Fall um den zweiten Hebelarm 20b handelt. Wie aus den Fig. 4 bis 7 sowie insbesondere aus den Detailansichten der Fig. 10 und 11 hervorgeht, weist der zweite Hebelarm 20b des Hebels 20 zu diesem Zweck zwei Blattfedern 24 auf, welche parallel zueinander angeordnet sind und deren Erstreckungsebenen parallel zur Längsachse der Verteilmaschine verlaufen, so dass im Falle einer Biegeverformung der beiden Blattfedern 24 der Hebel 20 geringfügig um seine Schwenkachse S verschwenkt wird und die an dem ersten Hebelarm 20a mittels der Tragmittel 21 festgelegten Ausleger 3 in entgegengesetzte Richtungen synchron nach unten bzw. nach oben zu schwingen vermögen. Um für eine gute elastische Nachgiebigkeit bei einer gleichwohl hohen mechanischen Stabilität zu sorgen, sind die Blattfedern 24 des zweiten Hebelarms 20b mit Abstand voneinander angeordnet und im Bereich der Schwenkachse S des Hebels 20 starr an dem ersten Hebelarm 20a festgelegt, wie beispielsweise mittels Schrauben. An seinem der Schwenkachse S fernen (unteren) Ende des zweiten Hebelarms 20b sind die Blattfedern 24 in den Zwischenräumen von parallel angeordneten Walzen 25 eines Walzenpaketes aufgenommen (vgl. insbesondere die Fig. 8), welche in einem Tragkäfig 26 fixiert sind. An dem Tragkäfig 26 ist einerseits das erste Stellglied 23 angelenkt, andererseits bildet der mit dem Walzenpaket versehene Tragkäfig 26 das der Schwenkachse S ferne Ende eines zu Stabilisierungszwecken dienenden Zusatzhebels 27, welcher im Wesentlichen starr ausgestaltet ist und koaxial zu dem Hebel 20 um die Schwenkachse S schwenkbar, aber unabhängig von dem Hebel 20 an dem Maschinenrahmen 2 gelagert ist. An dem Zusatzhebel 27 kann z.B. ferner ein Sensor (nicht zeichnerisch dargestellt) angeordnet sein, um die jeweilige Winkelstellung des Zusatzhebels 27 und folglich auch des Hebels 20 zu erfassen, wenn dieser mittels des ersten Stellgliedes 23 in eine (z.B. nicht vertikale) Hangausgleichsstellung der Ausleger 3 versetzt worden ist. Somit ist der Pendelausgleich auch dann wirksam, wenn die Ausleger 3 mittels des ersten Stellgliedes 23 in eine Hangausgleichsposition überführt worden sind, in welcher sie etwa parallel zur Hangneigung ausgerichtet sind.

Wie darüber hinaus den Fig. 4 bis 7 sowie insbesondere auch den Schemaansichten der Fig. 12A, 12B und 12C zu entnehmen ist, ist ein jeweiliges Stahlseil eines jeweiligen Tragmittels 21 eines jeweiligen Auslegers 3 nicht direkt an dem der Schwenkachse S fernen (oberen) Ende des ersten Hebelarms 20a des Hebels festgelegt, sondern über je ein zweites Stellglied 28, welches ähnlich dem ersten Stellglied 23 von einer, vorzugsweise elektrischen, Kolben-/Zylindereinheit gebildet sein kann, welche zwischen dem der Schwenkachse S fernen (oberen) Ende des ersten Hebelarms 20a des Hebels 20 und einem jeweiligen Tragmittel 21 wirksam ist. Wie weiter unten auf die Fig. 12C noch näher erläutert, dient ein jeweiliges zweites Stellglied 28 zum bedarfsweisen Anheben eines jeweiligen Auslegers 3 aus seiner "normalen" Betriebsposition, um beispielsweise eine Kollision mit Hindernissen auf dem Feld zu vermeiden. Hierbei ist z.B. der Kolben einer jeweiligen Kolben-/Zylindereinheit eines jeweiligen zweiten Stellgliedes 28 an dem der Schwenkachse S fernen (oberen) Ende des ersten Hebelarms 20a des Hebels 20 angelenkt, während der Zylinder einer jeweiligen Kolben-/Zylindereinheit eines jeweiligen zweiten Stellgliedes 28 an einer stationär an dem Vorratsbehälter 1 angeordneten Führung 29 geführt ist. Die Führung kann 29 beispielsweise ein sich längs zur Wirkungsrichtung einer jeweiligen Kolben-/Zylindereinheit eines jeweiligen zweiten Stellgliedes 28 erstreckendes Langloch umfassen, mit welchem ein sich von dem Kolben einer jeweiligen Kolben-/Zylindereinheit eines jeweiligen zweiten Stellgliedes 28 radial fort erstreckender Stift im Eingriff steht, wie dies vornehmlich in der Fig. 7 erkennbar ist.

Nachstehend ist die Funktionsweise des erfindungsgemäßen Pendelausgleichs unter Bezugnahme auf die Funktionsschemata der Fig. 12A bis 12C näher erläutert.

Bei der in der Fig. 12A wiedergegebenen Situation befindet sich der Hebel 20 in seiner - hier: vertikalen - Normalstellung, in welcher beide in ihre Betriebsposition (vgl. auch die Fig. 3) verbrachten Ausleger 3 vornehmlich horizontal angeordnet sind oder, wie es vorliegend der Fall ist, die Längsachsen der der Verteilmaschine nahen Auslegersegmente leicht nach oben geneigt sind. Sowohl das erste Stellglied 23 als auch die beiden zweiten Stellglieder 28 befinden sich gleichfalls in ihrer Normalstellung. Der mittels der Blattfedern 24 (siehe oben) nachgiebig elastisch ausgestaltete zweite Hebelarm 20b des Hebels 20 stellt in der oben beschriebenen Weise einen elastischen Pendelausgleich der Ausleger 3 sicher.

Bei der in der Fig. 12B dargestellten Situation befinden sich die zweiten Stellglieder 28 nach wie vor in ihrer Normalstellung gemäß der Fig. 12A, doch ist der Hebel 20 um einen gewünschten Winkel um seine Schwenkachse S verschwenkt worden, nämlich hier im Uhrzeigersinn in eine strichliniert angedeutete Schrägstellung. Dies ist durch Betätigung des ersten Stellgliedes 23 geschehen, indem der Kolben seiner Kolben-/Zylindereinheit entsprechend dem Schwenkwinkel des Hebels 20 etwas in den Zylinder eingeschoben worden ist. Dies hat zur Folge, dass der in Fig. 12B linke Ausleger 3 um einen Winkel α in eine strichliniert angedeutete angehobene Position überführt wird, während der in Fig. 12B rechte Ausleger 3 um denselben Winkel α in eine strichliniert angedeutete abgesenkte Position überführt wird, um für einen Hangausgleich während der Fahrt über Hangneigungen zu sorgen. Der mittels der Blattfedern 24 (siehe oben) nachgiebig elastisch ausgestaltete zweite Hebelarm 20b des Hebels 20 stellt in entsprechender Weise einen elastischen Pendelausgleich der Ausleger 3 sicher. Es versteht sich von selbst, dass durch Betätigung des ersten Stellgliedes 23 derart, dass der Kolben seiner Kolben-/Zylindereinheit etwas aus dem Zylinder ausgezogen wird (nicht gezeigt), ein Verschwenken des Hebels 20 in die entgegengesetzte Richtung zur Folge hat und auf diese Weise der rechte Ausleger 3 um einen Winkel angehoben werden kann, während der linke Ausleger um einen entsprechenden Winkel abgesenkt werden kann, um für einen Hangausgleich in die entgegengesetzte Richtung zu sorgen. Die weiter oben beschriebene Pendelausgleichsfunktion bleibt auch bei einer solchen Hangausgleichsposition der Ausleger 3 aktiv.

Bei der in der Fig. 12C gezeigten Situation befindet sich das erste Stellglied 23 wieder in seiner Normalstellung gemäß der Fig. 12A, doch sind in diesem Fall beide zweiten Stellglieder 28 derart betätigt worden, dass der Kolben ihrer Kolben-/Zylindereinheit jeweils in den Zylinder eingeschoben worden ist. Die an einem jeweiligen zweiten Stellglied 28 festgelegten Stahlseile der Tragmittel 21 werden hierbei aus ihrer Normalstellung in eine in der Fig. 12C strichliniert dargestellte Stellung mitgenommen, wodurch ein jeweiliger Ausleger 3 aus seiner Normalstellung in eine gleichfalls strichliniert dargestellte angehobene Stellung überführt - oder genauer: um seine erste Schwenkachse A₁ an dem Tragrahmen 10 der Verteilmaschine (vgl. die Fig. 1 bis 3) nach oben verschwenkt - wird. Eine solche "V"-Stellung der Ausleger 3 vermag insbesondere zum Schutz der Ausleger 3 bei sehr starken Schwankungen der Verteilmaschine bzw. einer sie tragenden Zugmaschine, wie eines Traktors, beispielsweise bei der Einfahrt in das und bei der Ausfahrt aus dem Vorgewende, und/oder vor einer Kollision mit auf dem Feld vorhandenen Hindernissen zu dienen, ohne die Ausleger 3 mittels des motorischen Stellantriebs 4 komplett in ihre Transport- und Ruheposition überführen zu müssen und/oder ohne die jeweilige Fahrspur auf dem Feld verlassen und das Hindernis großräumig umfahren zu müssen. Auch bei einer solchermaßen angehobenen Position der Ausleger 3 bleibt die weiter oben beschriebene Pendelausgleichsfunktion aktiv und vermag Extremstellungen der Ausleger 3 wirksam zu begrenzen.

Wie weiter oben näher erläutert, können die Ausleger 3 hierbei insbesondere mit zeichnerisch nicht wiedergegebenen Sensoren versehen sein, welche zur Erfassung des Abstandes eines jeweiligen Auslegers 3 vom Boden ausgebildet sind, wobei die Sensoren mit einer ebenfalls zeichnerisch nicht dargestellten Steuer- und/oder Regeleinrichtung zur Betätigung des ersten Stellgliedes 23 und/oder des zweiten Stellgliedes 28 in Verbindung stehen, um letztere in Abhängigkeit der sensorisch erfassten Bodenabstände der Ausleger 3 zu betätigen und die Ausleger 3 z.B. in eine Hangausgleichsposition entsprechend der Fig. 12B und/oder in eine angehobene "V"-Stellung entsprechend der Fig. 12C zu überführen.

## Patentansprüche

1. Landwirtschaftliche Verteilmaschine, umfassend:
- wenigstens einen von einem Maschinenrahmen (2) getragenen Vorratsbehälter (1) zur Aufnahme von Verteilgut;
- wenigstens ein dem Vorratsbehälter (1) nachgeordnetes Dosierorgan;
- wenigstens zwei an dem Maschinenrahmen (2) und/oder an dem Vorratsbehälter (1) schwenkbar gelagerte Ausleger (3);
- eine Mehrzahl an von einem jeweiligen Ausleger (3) getragenen und mit Abstand voneinander angeordneten Verteilorganen; und
- eine Mehrzahl an Förderleitungen, welche zur Überführung des Verteilgutes von dem Dosierorgan an die Verteilorgane dienen und von welchen zumindest endständige Förderleitungsabschnitte von den Auslegern (3) getragen sind,
wobei die Ausleger (3) mittels je eines motorischen Stellantriebs (4) zwischen einer Betriebsposition, in welcher sich die Ausleger (3) vornehmlich horizontal in entgegengesetzte Richtungen quer zur Längsachse der Verteilmaschine erstrecken, und einer Transport- und Ruheposition, in welcher sich die Ausleger (3) vornehmlich vertikal erstrecken, verschwenkbar sind, wobei an dem Maschinenrahmen (2) und/oder an dem Vorratsbehälter (1) ein Hebel (20) um eine sich im Wesentlichen parallel zur Längsachse der Verteilmaschine erstreckende Schwenkachse (S) schwenkbar gelagert ist, wobei der Hebel (10) einen ersten Hebelarm (20a) aufweist, an dessen seiner Schwenkachse (S) fernem Ende ein jeweiliger Ausleger (3) in seiner Betriebsposition mittels wenigstens eines Tragmittels (21) aufgehängt ist, **dadurch gekennzeichnet, dass** der Hebel (20) einen zweiten Hebelarm (20b) aufweist, dessen seiner Schwenkachse (S) fernes Ende in Bezug auf den Maschinenrahmen (2) und/oder auf den Vorratsbehälter (1) festgestellt ist, wobei zumindest ein Axialabschnitt des Hebels (20) quer zur Längsachse der Verteilmaschine elastisch nachgiebig ausgestaltet ist, um für einen Pendelausgleich der Ausleger (3) in deren Betriebsposition zu sorgen.

2. Verteilmaschine nach Anspruch 1, **dadurch gekennzeichnet, dass** sich der Hebel (20) vornehmlich in Vertikalrichtung erstreckt, wobei sich insbesondere
- der erste Hebelarm (20a) von der Schwenkachse (S) des Hebels (20) nach oben und
- der zweite Hebelarm (20b) von der Schwenkachse (S) des Hebels (20) nach unten
erstreckt.

3. Verteilmaschine nach Anspruch 1 oder 2, **dadurch gekennzeichnet, dass** der elastisch nachgiebige Axialabschnitt des Hebels (20) wenigstens zwei Blattfedern (24) aufweist, deren Erstreckungsebenen im Wesentlichen parallel zueinander und insbesondere im Wesentlichen parallel zur Längsachse der Verteilmaschine angeordnet sind.

4. Verteilmaschine nach Anspruch 3, **dadurch gekennzeichnet, dass** wenigstens einer der Hebelarme, insbesondere der zweite Hebelarm (20b), des Hebels (20) von den wenigstens zwei Blattfedern (24) gebildet ist, wobei die Blattfedern (24) insbesondere mit Abstand voneinander angeordnet sind.

5. Verteilmaschine nach Anspruch 3 oder 4, **dadurch gekennzeichnet, dass** die Blattfedern (24) eines der Hebelarme (20b) im Bereich der Schwenkachse (S) des Hebels (20) starr an dem anderen Hebelarm (20a) festgelegt sind.

6. Verteilmaschine nach einem der Ansprüche 3 bis 5, **dadurch gekennzeichnet, dass** die Blattfedern (24) eines der Hebelarme (20b) an dem der Schwenkachse (S) fernen Ende des Hebels (20) in den Zwischenräumen von parallel angeordneten Walzen (25) eines Walzenpaketes aufgenommen sind, wobei das Walzenpaket insbesondere in einem Tragkäfig (26) angeordnet ist.

7. Verteilmaschine nach einem der Ansprüche 1 bis 6, **dadurch gekennzeichnet, dass** der nachgiebig elastisch ausgestaltete Hebelarm (20b) des Hebels (20) mittels eines Zusatzhebels (27) stabilisiert ist, wobei der Zusatzhebel (27) koaxial zu dem Hebel (20) schwenkbar gelagert und an dem der Schwenkachse (S) des nachgiebig elastisch ausgestalteten Hebelarms (20b) des Hebels (20) fernen Ende mit diesem verbunden ist.

8. Verteilmaschine nach Anspruch 6 und 7, **dadurch gekennzeichnet, dass** der Tragkäfig (26) mit dem Walzenpaket, zwischen dessen parallel angeordneten Walzen (25) die Blattfedern (24) eines der Hebelarme (20b) des Hebels (20) aufgenommen sind, an dem der Schwenkachse (S) fernen Ende des Zusatzhebels (27) angeordnet ist.

9. Verteilmaschine nach einem der Ansprüche 1 bis 8, **dadurch gekennzeichnet, dass** der zweite Hebelarm (20b) des Hebels (20) an seinem der Schwenkachse (S) fernen Ende an einem ersten Stellglied (23) angelenkt ist, um den Hebel (20) durch Betätigung des ersten Stellgliedes (23) in verschiedenen, um die Schwenkachse (S) verschwenkten Positionen in Bezug auf den Maschinenrahmen (2) und/oder auf den Vorratsbehälter (1) festzustellen und auf diese Weise für einen Hangausgleich der Ausleger (3) in deren Betriebsposition zu sorgen, wobei das erste Stellglied (23) insbesondere eine Kolben-/Zylindereinheit aufweist.

10. Verteilmaschine nach einem der Ansprüche 1 bis 9, **dadurch gekennzeichnet, dass** ein jeweiliges Tragmittel (21) eines jeweiligen Auslegers (3) über je ein zweites Stellglied (28) an dem der Schwenkachse (S) des Hebels (20) fernen Ende des ersten Hebelarms (20a) aufgehängt ist, um einen jeweiligen Ausleger (3) durch Betätigung des jeweiligen zweiten Stellgliedes (28) aus seiner Betriebsposition anzuheben und/oder abzusenken.

11. Verteilmaschine nach Anspruch 10, **dadurch gekennzeichnet, dass** das zweite Stellglied (28) eine Kolben-/Zylindereinheit aufweist, wobei insbesondere
- der Kolben oder der Zylinder der Kolben-/Zylindereinheit eines jeweiligen zweiten Stellgliedes (28) an dem der Schwenkachse (S) fernen Ende des ersten Hebelarms (20a) des Hebels (20) angelenkt ist und
- der Zylinder oder der Kolben der Kolben-/Zylindereinheit eines jeweiligen zweiten Stellgliedes (28) an einer stationär an dem Maschinenrahmen (2) und/oder an dem Vorratsbehälter (1) angeordneten Führung (29) geführt ist.

12. Verteilmaschine nach einem der Ansprüche 1 bis 11, **dadurch gekennzeichnet, dass** die Ausleger (3) mit Sensoren ausgestattet sind, welche zur Erfassung des Abstandes eines jeweiligen Auslegers vom Boden ausgebildet sind, wobei die Sensoren insbesondere mit einer Steuer- und/oder Regeleinrichtung zur Betätigung des ersten Stellgliedes (23) und/oder des zweiten Stellgliedes (28) in Verbindung stehen.

13. Verteilmaschine nach einem der Ansprüche 1 bis 12, **dadurch gekennzeichnet, dass**
- die Tragmittel (21) der Ausleger (3) von Metallseilen gebildet sind; und/oder
- ein jeweiliges Tragmittel (21) unter einem größeren Abstand von der Längsachse der Verteilmaschine an einem jeweiligen Ausleger (3) festgelegt ist als der motorische Stellantrieb (4) eines jeweiligen Auslegers (3).

14. Verteilmaschine nach einem der Ansprüche 1 bis 13, **dadurch gekennzeichnet, dass** ein jeweiliger Ausleger (3) eine Mehrzahl an schwenkbar aneinander angelenkten Auslegersegmenten (3a, 3b, 3c, 3d) umfasst, wobei ein jeweiliges Tragmittel (21) insbesondere im Bereich des der Längsachse der Verteilmaschine fernen Endes eines jeweiligen der Längsachse der Verteilmaschine nahen Auslegersegmentes (3a) festgelegt ist.

15. Verteilmaschine nach Anspruch 14, **dadurch gekennzeichnet, dass** die Auslegersegmente (3a, 3b, 3c, 3d) des Auslegers (3) zwischen der Transport- und Ruheposition, in welcher sie sowohl im Wesentlichen parallel zueinander als auch vornehmlich vertikal angeordnet sind, und der Betriebsposition, in welcher sie sowohl im Wesentlichen hintereinander als auch vornehmlich horizontal angeordnet sind, relativ zueinander verschwenkbar sind.

## Claims

1. Agricultural distributor, comprising:
- at least one storage container (1) carried by a machine frame (2) for receiving the product for distribution;
- at least one metering member arranged downstream of the storage container (1);
- at least two booms (3) which are mounted pivotably on the machine frame (2) and/or on the storage container (1) ;
- a plurality of distributing members which are carried by a respective boom (3) and are arranged at a distance from one another; and
- a plurality of conveying lines which serve for transferring the product for distribution from the metering member to the distributing members and of which at least end conveying line portions are carried by the booms (3),
wherein the booms (3) are pivotable by means of a motorized actuator (4), respectively, each between an operating position, in which the booms (3) extend primarily horizontally in opposite directions transversely with respect to the longitudinal axis of the distributor, and a transport and inoperative position, in which the booms (3) extend primarily vertically, wherein a lever (20) is mounted on the machine frame (2) and/or on the storage container (1) so as to be pivotable about a pivot axis (S) extending substantially parallel to the longitudinal axis of the distributor, wherein the lever (10) has a first lever arm (20a), at the end of which that is remote from the pivot axis (S) thereof a respective boom (3) is suspended in its operating position by means of at least one carrying means (21), **characterized in that** the lever (20) has a second lever arm (20b), the end of which that is remote from the pivot axis (S) thereof is fixed with respect to the machine frame (2) and/or with respect to the storage container (1), wherein at least one axial portion of the lever (20) is elastically flexible transversely with respect to the longitudinal axis of the distributor in order to provide for pendulum compensation of the booms (3) in their operating position.

2. Distributor according to Claim 1, **characterized in that** the lever (20) extends primarily in the vertical direction, wherein in particular
- the first lever arm (20a) extends upwards from the pivot axis (S) of the lever (20), and
- the second lever arm (20b) extends downwards from the pivot axis (S) of the lever (20).

3. Distributor according to Claim 1 or 2, **characterized in that** the elastically flexible axial portion of the lever (20) has at least two leaf springs (24), the planes of extent of which are arranged substantially parallel to one another and in particular substantially parallel to the longitudinal axis of the distributor.

4. Distributor according to Claim 3, **characterized in that** at least one of the lever arms, in particular the second lever arm (20b), of the lever (20) is formed by the at least two leaf springs (24), wherein the leaf springs (24) are in particular arranged at a distance from one another.

5. Distributor according to Claim 3 or 4, **characterized in that** the leaf springs (24) of one of the lever arms (20b) are fixed rigidly to the other lever arm (20a) in the region of the pivot axis (S) of the lever (20).

6. Distributor according to one of Claims 3 to 5, **characterized in that** the leaf springs (24) of one of the lever arms (20b) at that end of the lever (20) which is remote from the pivot axis (S) are accommodated in the intermediate spaces of parallel rollers (25) of a roller pack, wherein the roller pack is arranged in particular in a carrying cage (26).

7. Distributor according to one of Claims 1 to 6, **characterized in that** the flexibly elastic lever arm (20b) of the lever (20) is stabilized by means of an additional lever (27), wherein the additional lever (27) is mounted pivotably coaxially with respect to the lever (20) and is connected thereto at the end remote from the pivot axis (S) of the flexibly elastic lever arm (20b) of the lever (20).

8. Distributor according to Claims 6 and 7, **characterized in that** the carrying cage (26) with the roller pack, between the parallel rollers (25) of which the leaf springs (24) of one of the lever arms (20b) of the lever (20) are accommodated, is arranged at the end of the additional lever (27) that is remote from the pivot axis (S).

9. Distributor according to one of Claims 1 to 8, **characterized in that** the second lever arm (20b) of the lever (20) at its end that is remote from the pivot axis (S) is coupled to a first actuating element (23) in order, by actuation of the first actuating element (23), to fix the lever (20) in different positions, which are pivoted about the pivot axis (S), with respect to the machine frame (2) and/or with respect to the storage container (1) and in this way to provide for slope compensation of the booms (3) in their operating position, wherein the first actuating element (23) in particular has a piston/cylinder unit.

10. Distributor according to one of Claims 1 to 9, **characterized in that** a respective carrying means (21) of a respective boom (3) is suspended at that end of the first lever arm (20a) which is remote from the pivot axis (S) of the lever (20) respectively via a second actuating element (28) in order to raise and/or to lower a respective boom (3) from its operating position by actuation of the respective second actuating element (28).

11. Distributor according to Claim 10, **characterized in that** the second actuating element (28) has a piston/cylinder unit, wherein in particular
- the piston or the cylinder of the piston/cylinder unit of a respective second actuating element (28) is coupled to that end of the first lever arm (20a) of the lever (20) which is remote from the pivot axis (S), and
- the cylinder or the piston of the piston/cylinder unit of a respective second actuating element (28) is guided by way of a guide (29) arranged in a stationary manner on the machine frame (2) and/or on the storage container (1).

12. Distributor according to one of Claims 1 to 11, **characterized in that** the booms (3) are equipped with sensors which are designed for sensing the distance of a respective boom from the ground, wherein the sensors are in particular connected to an open-loop and/or closed-loop control device for actuating the first actuating element (23) and/or the second actuating element (28).

13. Distributor according to one of Claims 1 to 12, **characterized in that**
- the carrying means (21) of the booms (3) are formed by metal cables; and/or
- a respective carrying means (21) is fixed on a respective boom (3) at a greater distance from the longitudinal axis of the distributor than the motorized actuator (4) of a respective boom (3).

14. Distributor according to one of Claims 1 to 13, **characterized in that** a respective boom (3) comprises a plurality of boom segments (3a, 3b, 3c, 3d) which are coupled pivotably to one another, wherein a respective carrying means (21) is fixed in particular in the region of the end, which is remote from the longitudinal axis of the distributor, of a respective boom segment (3a), which is close to the longitudinal axis of the distributor.

15. Distributor according to Claim 14, **characterized in that** the boom segments (3a, 3b, 3c, 3d) of the boom (3) are pivotable relative to one another between the transport and inoperative position, in which they are arranged both substantially parallel to one another and also primarily vertically, and the operating position, in which they are arranged both substantially one behind another and also primarily horizontally.

## Revendications

1. Machine d'épandage agricole, comprenant :
- au moins un bac de réserve (1) supporté par un cadre de machine (2) destiné à recevoir du produit à épandre ;
- au moins un élément de dosage placé en aval du bac de réserve (1) ;
- au moins deux bras (3) disposés de façon à pouvoir pivoter au niveau du cadre de machine (2) et/ou du bac de réserve (1) ;
- une pluralité d'éléments d'épandage supportés au niveau d'un bras (3) respectif et disposés à une certaine distance les uns des autres ; et
- une pluralité de conduites de transport servant au transfert du produit à épandre depuis l'élément de dosage jusqu'aux éléments d'épandage et à partir desquelles au moins des sections de conduite de transport terminales sont supportées par les bras (3) ;
dans laquelle les bras (3) peuvent être pivotés à l'aide respectivement d'un mécanisme de commande (4) motorisé entre une position de fonctionnement dans laquelle les bras (3) s'étendent de préférence de façon horizontale dans les directions opposées transversalement à l'axe longitudinal de la machine d'épandage et une position de transport et de repos dans laquelle les bras (3) s'étendent de préférence verticalement ;
dans laquelle un levier (20) est disposé de façon à pouvoir pivoter autour d'un axe de pivotement (S) s'étendant pour l'essentiel parallèlement à l'axe longitudinal de la machine d'épandage au niveau du cadre de machine (2) et/ou au niveau du bac de réserve (1), ledit levier (10) comportant un premier bras de levier (20a) au niveau de l'extrémité, éloignée de son axe de pivotement (S), de laquelle un bras (3) respectif est suspendu dans sa position de fonctionnement à l'aide d'au moins un moyen de support (21) ;
**caractérisée en ce que** le levier (20) comporte un deuxième bras de levier (20b) dont l'extrémité éloignée de son axe de pivotement (S) est fixée par rapport au cadre de machine (2) et/ou au bac de réserve (1), au moins une section axiale dudit levier (20) étant réalisée de façon flexible et élastique transversalement par rapport à l'axe longitudinal de la machine d'épandage, pour veiller à un équilibrage pendulaire des bras (3) dans leur position de fonctionnement.

2. Machine d'épandage selon la revendication 1, **caractérisée en ce que** le levier (20) s'étend de préférence dans la direction verticale :
- le premier bras de levier (20a) s'étendant notamment vers le haut par rapport à l'axe de pivotement (S) du levier (20) ;
- le deuxième bras de levier (20b) s'étendant notamment vers le bas par rapport à l'axe de pivotement (S) du levier (20) .

3. Machine d'épandage selon la revendication 1 ou 2, **caractérisée en ce que** la section axiale flexible et élastique du levier (20) comportant au moins deux ressorts à lames (24) dont les plans d'extension sont pour l'essentiel disposés parallèlement l'un par rapport à l'autre et notamment pour l'essentiel parallèlement à l'axe longitudinal de la machine d'épandage.

4. Machine d'épandage selon la revendication 3, **caractérisée en ce qu'**au moins un des bras de levier, notamment le deuxième bras de levier (20b) du levier (20) est formé par au moins deux ressorts à lames (24), les ressorts à lames (24) étant notamment disposés à une certaine distance l'un de l'autre.

5. Machine d'épandage selon la revendication 3 ou 4, **caractérisée en ce que** les ressorts à lames (24) d'un des bras de levier (20b) sont fixés de façon rigide à l'autre bras (20a) dans la région de l'axe de pivotement (S) du levier (20).

6. Machine d'épandage selon l'une quelconque des revendications 3 à 5, **caractérisée en ce que** les ressorts à lames (24) d'un des bras de levier (20b) sont reçus au niveau de l'extrémité du levier (20) éloignée de l'axe de pivotement (S) dans les interstices de rouleaux (25) d'un paquet de rouleaux disposés parallèlement les uns par rapport aux autres, dans lequel le paquet de rouleaux est notamment disposé dans une cage de support (26).

7. Machine d'épandage selon l'une quelconque des revendications 1 à 6, **caractérisée** n ce que le bras de levier (20b) du levier (20), disposé de façon flexible et élastique, est stabilisé à l'aide d'un levier supplémentaire (27), le levier supplémentaire (27) étant disposé de façon à pouvoir pivoter dans le plan coaxial par rapport au levier (20) et étant relié à l'extrémité éloignée de l'axe de pivotement (S) du bras de levier (20b) du levier (20) configuré de façon souple et élastique au niveau de celle-ci.

8. Machine d'épandage selon la revendication 6 et 7, **caractérisée en ce que** la cage de support (26) avec le paquet de rouleaux, entre les rouleaux (25) disposés parallèlement duquel les ressorts à lames (24) d'un des bras de levier (20b) du levier (20) sont logés, est disposée au niveau de l'extrémité du levier supplémentaire (27) éloignée de l'axe de pivotement (S).

9. Machine d'épandage selon l'une quelconque des revendications 1 à 8, **caractérisée en ce que** le deuxième bras de levier (20b) du levier (20) est articulé au niveau de son extrémité éloignée l'axe de pivotement (S), au niveau d'un premier organe de réglage (23), pour fixer le levier (20) par actionnement du premier organe de réglage (23) dans différentes positions pivotant autour de l'axe de pivotement (S) par rapport au cadre de machine (2) et/ou au bac de réserve (1) et pour veiller de cette façon à équilibrer la suspension des bras (3) dans leur position de fonctionnement, le premier organe de réglage (23) comportant notamment une unité piston-cylindre.

10. Machine d'épandage selon l'une quelconque des revendications 1 à 9, **caractérisée en ce qu'**un moyen de support (21) respectif d'un bras (3) respectif est suspendu via respectivement un deuxième organe de réglage (28) à l'extrémité du premier bras de levier (20a) éloignée de l'axe de pivotement (S) du levier (20), pour faire monter et/ou descendre un bras (3) respectif par actionnement du deuxième organe de réglage (28) respectif à partir de sa position de fonctionnement.

11. Machine d'épandage selon la revendication 10, **caractérisée en ce que** le deuxième organe de réglage (28) comporte une unité piston-cylindre, dans laquelle notamment :
- le piston ou le cylindre de l'unité piston/cylindre d'un deuxième organe de réglage (28) respectif est articulé au niveau de l'extrémité, éloignée de l'axe de pivotement (S), du premier bras de levier (20a) du levier (20) ; et
- le cylindre ou le piston de l'unité piston/cylindre d'un deuxième organe de réglage (28) respectif est guidé de façon stationnaire au niveau d'un guide (29) disposé au niveau du cadre de machine (2) et/ou au niveau du bac de réserve (1).

12. Machine d'épandage selon l'une quelconque des revendications 1 à 11, **caractérisée en ce que** les bras (3) sont équipés de capteurs prévus pour détecter la distance d'un bras respectif par rapport au plancher, dans lequel les capteurs sont notamment reliés à un dispositif de réglage et/ou de commande destiné à actionner le premier organe de réglage (23) et/ou le deuxième organe de réglage (28) .

13. Machine d'épandage selon l'une quelconque des revendications 1 à 12, **caractérisée en ce que** :
- les moyens de support (21) des bras (3) sont formés de câbles métalliques ; et/ou
- un moyen de support (21) respectif est fixé à une plus grande distance de l'axe longitudinal de la machine d'épandage au niveau du bras (3) respectif que le mécanisme de commande (4) motorisé d'un bras (3) respectif.

14. Machine d'épandage selon l'une quelconque des revendications 1 à 13, **caractérisée en ce qu'**un bras (3) respectif comprend une pluralité de segments de bras (3a, 3b, 3c, 3d) articulés de façon pivotante les uns aux autres, un moyen de support (21) respectif étant notamment fixé dans la région de l'extrémité éloignée de l'axe longitudinal de la machine d'épandage d'un segment de bras (3a) respectif proche de l'axe longitudinal de la machine d'épandage.

15. Machine d'épandage selon la revendication 14, **caractérisée en ce que** les segments de bras (3a, 3b, 3c, 3d) du bras (3) peuvent pivoter les uns par rapport aux autres entre la position de transport et de repos dans laquelle ils sont disposés pour l'essentiel tant parallèlement les uns par rapport aux autres que de préférence verticalement et la position de fonctionnement dans laquelle ils sont disposés pour l'essentiel les uns derrière les autres et de préférence horizontalement.
